# EUROPÄISCHE PATENTANMELDUNG

(11) **EP 1 008 556 A2**
(43) Veröffentlichungstag der Anmeldung: **14.06.2000**
(21) Anmeldenummer: 99122544.2
(22) Anmeldetag: 12.11.1999
(51) Int. Cl.: C02F 1/32, C02F 1/36

(54) **Verfahren und Vorrichtung zur Dekontamination schadstoffbelasteter Wässer**

(30) Priorität: 07.12.1998 DE 19856272
(71) Anmelder: Preussag AG, 30625 Hannover (DE)
(72) Erfinder: Tschwatschal, Frank, Dr., 06712 Zeitz (DE); Menz, Kathrin, Dr., 30173 Hannover (DE); Heidel, Wolfgang, 04683 Naunhof (DE); Grieser, Ilona, 06132 Halle (DE); Hennig, Horst, Prof. Dr., 04103 Leipzig (DE); Ecke, Martin, Dr., 04668 Grimma (DE)
(74) Vertreter: Köckeritz, Günter

(57) **Zusammenfassung**

Die Erfindung betrifft ein Verfahren und eine Anlage zur Dekontamination schadstoffbelasteter Wässer, die schwer abbaubare organische Verbindungen enthalten, durch Einwirkung eines Oxidationsmittels auf das belastete Behandlungsgut, wobei das Behandlungsgut in einem Reaktor einer synchronen photo-/ sonochemischen Behandlung ausgesetzt wird, wobei das belastete Behandlungsgut in einen Photosonoreaktor geleitet wird, wo durch eine im Reaktor angeordnete Hochleistungssonotrode im Behandlungsgut ein Schallfeld erzeugt wird und direkt am Ort der Schadstoffanreicherung durch eine Sonolyse des Wassers das photochemisch - aktivierbare Oxidationsmittel H₂O₂ gebildet wird und das Behandlungsgut gleichzeitig mit Licht bestrahlt wird.
Das erfindungsgemäße Verfahren zeichnet sich gegenüber den Einzelverfahren durch überraschende Effekte hinsichtlich der Abbaugeschwindigkeit organischer Kontaminanten aus, welche eine Steigerung der Mineralisierungseffizienz bewirkt bzw. diese überhaupt erst ermöglicht. Die Steigerung der Mineralisierungseffizienz wird durch das synchrone Einwirken von Ultraschall und Licht an ein- und demselben Volumen des Reaktors erreicht. Der überraschende Effekt tritt direkt am Ort der Schadstoffanreicherung ein, wo die durch die Bestrahlung erzielte Photoanregung der abzubauenden Spezies und die Kavitationsereignisse in der Anlage synchron stattfinden. Infolgedessen kann der an sich übliche Einsatz von Oxidationsmitteln (O₃, H₂O₂) vollständig eingestellt, bzw. auf ein Minimum reduziert werden.

## Beschreibung

Die Erfindung betrifft ein Verfahren und eine Vorrichtung zur Dekontamination schadstoffbelasteter Wässer mittels Ultraschall (sonochemischer Schadstoffabbau) und Lichtstrahlung (photochemischer Schadstoffabbau). Insbesondere ist das Verfahren dadurch gekennzeichnet, daß Ultraschall und Bestrahlung zeitlich und räumlich synchron angewendet werden, wobei überraschende Effekte auftreten, die die Effizienz beim Schadstoffabbau gegenüber den Einzelverfahren (Ultraschall oder Bestrahlung) enorm steigern bzw. überhaupt erst möglich machen.

### Beschreibung

Der Abbau umweltgefährdender Wasserinhaltstoffe ist von großer ökologischer Bedeutung. Die Einhaltung der gesetzlich vorgegebenen Grenz- und Richtwerte für Schadstoffgehalte (von z. B. chlororganischen Verbindungen, polycyclischen aromatischen Verbindungen, Nitroaromaten) in Prozeßabwässern, Sickerwässern, Grund- und Oberflächenwässern ist an vielen Standorten, z. B. der chemischen Industrie, ein Problem. Aufwendige Reinigungsverfahren müssen eingesetzt werden, um die durch die z. B. 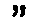 Holländische Liste" oder 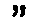 Berliner Liste" aufgezeigten Richtwerte einzuhalten.
Trotz der Vielzahl der vorhandenen Methoden zur Schadstoffentfernung aus Wässern (biologisch, chemisch, physikalisch) ist die Eliminierung einer Reihe hochtoxischer bzw. schwer abbaubarer organischer Verbindungen nach wie vor problematisch oder noch nicht gelöst. Dieses trifft insbesondere auf Stoffe aus der Reihe der Chlororganika sowie Nitroaromaten (Altlasten der chemischen Industrie), Antibiotika, aber auch bestimmte Pflanzenschutzmittel-Wirkstoffe, z. B. aus der Reihe der Atrazine, zu. Im Hinblick auf die Störung bzw. Verhinderung mikrobiologischer Klärprozesse durch Verbindungen dieser Art ist deren Entfernung aus dem Wasserkreislauf besonders wichtig. In solchen Fällen bisher praktizierte Dekontaminationsverfahren, wie z. B. die Adsorption anderweitig nicht entfernbarer Bestandteile an Aktivkohle, die Aufkonzentration durch Umkehrosmose oder Stripverfahren, bedeuten aber nur eine Verlagerung der Kontaminanten in andere Medien und stellen keine dauerhafte Lösung dar.
Neben der Reinigung mittels biologischer Methoden in Kläranlagen wurden in den letzten Jahren vermehrt chemische, insbesondere photochemische, Lösungsansätze zur Reinigung von Abwässern diskutiert. In Übersichtsartikeln wird der aktuelle Stand der Abwasserbehandlungstechniken beschrieben (Solare Abwasserentgiftung - Bahnemann, D.: Nachr. Chem. Tech. Lab. 42 (4) (1994), 378; Grundwassersanierung - Wintrich, H. et al.: Chem. Ing. Tech. 67 (1) (1995), 41; Edel, H.-G. et al.: Entsorgungspraxis 7/8 (1997), 64; Abwasserdesinfektion - Popp, W.: Wasser Abwasserpraxis 6 (1996), 31).
Neue Impulse auf dem Gebiet der rein photochemischen Abwasserbehandlung (DE 43 04 444) werden durch den Einsatz von VUV-Strahlern (Excimer-Strahler) erwartet. Die Schadstoffe werden einerseits durch die kurzwellige VUV-Strahlung abgebaut, gleichzeitig wird durch die in situ erzeugten OH-Radikale (H₂O-Photolyse) ein zusätzliches Oxidationsmittel erzeugt, was zur Mineralisation der Schadstoffe beiträgt (Oppenländer, T.: Chem. Ing. Tech. 67 (1) (1995), 96, ibid. 69 (9) (1997), 1245, ibid. 70 (8) (1998), 1013). Nachteile dieser Behandlung sind zu geringe Eindringtiefen der VUV-Strahlung und Strahlungsquellen mit zu geringer Leistung.

Ein Prinzip der photokatalytischen Oxidation von Schadstoffen in wässriger Lösung beruht auf der Ausnutzung der Halbleitereigenschaften von Photokatalysatoren (Mills, A. et al.: Chem. Soc. Rev. 1993, 417; Hoffmann, M. et al.: Chem. Rev. 95 (1995), 69). In der Praxis wird derzeit vor allem Titandioxid verwendet (Linsebiegler, A. et al.: Chem. Rev. 95 (1995), 735).
Ziel dieser Technologien ist die Ausnutzung energiereicher Photonen des Sonnenlichtes, die in der Lage sind, in den Photokatalysatoren sogenannte Elektron - Lochpaare zu erzeugen. Die durch Elektronenübergänge in das Leitungsband erzeugten Lochstellen im Valenzband besitzen eine hohe Oxidationskraft für praktisch alle organischen Schadstoff-moleküle, die im Idealfall mineralisiert werden. Praktische Anwendung finden die photokatalytischen Methoden in Dünnfilm-Festbettreaktoren, Dünnfilm-Suspensionsreaktoren und Solarreaktoren (DE 19514372). Nachteile dieser Technologie werden vor allem mit der Oberflächendesaktivierung des Katalysators durch Adsorptionsprozesse und mit aufwendigen. Trenn- und Reaktivierungsmaßnahmen der Katalysatorteilchen begründet.
Kombinierte oxidative Verfahren haben sich bei der Abwasserreinigung als besonders effektiv erwiesen. Alle Prozesse, bei denen die organischen Wasserinhaltstoffe in einer ersten Stufe über OH-Radikale oxidiert bzw. mineralisiert werden, werden inzwischen unter dem Begriff Advanced Oxidation Process (AOP) zusammengefaßt (Ruppert, G: et al.: Chemosphere 28 (8) (1994), 1447).
Die Anwendung von FENTONS Reagenz ist besonders für die Reinigung organisch hochbelasteter Industrieabwässer (gefärbt, getrübt) geeignet (Wabner, D. et al.: Chem. Ing. Tech. 68 (6) (1996), 724). Aus einer Mischung von H₂O₂ und Eisen(II)-Salzen werden reaktive OH-Radikale erzeugt, die organische Wasserinhaltstoffe oxidieren bzw. mineralisieren. Das katalytische Oxidationsverfahren wurde als Fentox-Prozeß patentiert (DE 4314521). Nachteile dieses Verfahrens ergeben sich aus den Fragen der Katalysatorregenerierung (elektrochemisch), Aufsalzeffekten (pH-Wert < 3, nachgeschaltete Neutralisation) und Schadstoffadsorption an Eisenhydroxidoberflächen bei der Nachbehandlung bzw. Abtrennung des Katalysatorfolgeproduktes.
Eine vollständige Entfernung von organischen Schadstoffen aus Wässern wird durch deren Mineralisierung, mittels photokatalytischer Abwasserreinigung unter Verwendung photochemisch aktivierbarer Oxidationsmittel erreicht. Diese AOP-Verfahren, UV/H₂O₂ (DE 4243208) UV/O₃ (DE 4216784), UV/H₂O₂/O₃ (DE 9208136), sind in den letzten Jahren bis zur industriellen Anwendbarkeit entwickelt worden (Lengrini, O. et al.: Chem. Rev. 93 (1993), 671).
Die Oxidationsmittel H₂O₂ oder O₃ werden während der Bestrahlung durch kurzweilige Lichtanregung photolysiert, wobei direkt oder über Folgereaktionen OH-Radikale gebildet werden. OH-Radikale sind das Oxidationsmittel mit dem nach Fluor höchsten Oxidationspotential von + 2.8 V. Zusätzlich werden ausgewählte Schadstoffe durch die Bestrahlung selbst elektronisch angeregt, so daß ihre Reaktivität gegenüber dem Oxidationsmittel erhöht wird.
Der Nachteil der AOP-Verfahren liegt oftmals in einem unverhältnismäßig hohen Oxidationsmittelverbrauch, was auf das Absorptionsverhalten der Oxidationsmittel in Abhängigkeit von der Schadstoffkonzentration und Matrixeffekten zurückzuführen ist. Außerdem besteht ein ungünstiges Verhältnis zwischen der Eindringtiefe der notwendigen kurzwelligen UV-Strahlung und der durch die Lichtquellen erzeugten charakteristischen Strahlung in Bezug auf die Energiebilanz.
In den letzten Jahren wurden Dekontaminationsverfahren für Böden und Wässer durch nichtklassischen Energieeintrag wissenschaftlich intensiv untersucht (Hauthal, H.-G.: Nachr. Chem. Tech. Lab. 46 (1998), 954).
Mittels Ultraschall hoher Intensität können diverse organische Wasserschadstoffe bis hin zur Mineralisation abgebaut werden. Wird Wasser Ultraschall ausreichend hoher Intensität ausgesetzt, entstehen OH-Radikale, sowie deren Rekombinationsprodukt H₂O₂. In Analogie zur oxidativen Photomineralisierung sind primär die aus der Sonolyse des Wassers resultierenden OH-Radikale für die Abbauprozesse verantwortlich (Suslick, K. S.: UltrasoundIts Chemical, Physical and Biological Effects, Weinheim, 1988; Rehoreck, D. et al.: Z. Chem. 29 (1989), 389). Zusätzlich sind kavitativ bedingte Oxidationsvorgänge, das heißt die im Bereich der 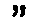 heißen" Kavitationsblasen herrschenden Pyrolysebedingungen (Druck bis zu 10⁸ Pa, Temperatur 2000 - 10000 K) für den Schadstoffabbau verantwortlich (Henglein, A. et al.: J. Phys. Chem. 92 (1988), 2978; Ondruschka, B. et al.: DECHEMA Fachgespräche Umweltschutz, 1997).
Aufgrund der hohen Temperaturen sowie der extremen Druckgradienten liegt Wasserdampf in den Kavitationsblasen im überkritischen Zustand vor, woraus eine erhöhte Lipophilie in dieser Umgebung resultiert.
Dementsprechend erfolgt eine Anreicherung hydrophober organischer Schadstoffe direkt am Ort der OH-Radikal- und H₂O₂-Bildung.
Nachteile der Ultraschallbehandlung sind zu geringe OH-Radikalausbeuten, verbunden mit einem hohen Behandlungszeitaufwand und fehlende reaktortechnische Optimierungen zur effektiven Ausnutzung des Ultraschalls.
Für bestimmte organische Verbindungen, insbesondere Chloraromaten und Chloraliphaten, führen aber weder die sonochemische noch die photolytische Aktivierung allein, unter ökonomisch vertretbaren Bedingungen, zu der angestrebten Mineralisierung bzw. zu einem Teilabbau bis zur biologischen Verfügbarkeit dieser Substrate.
Bisher gibt es nur wenige Veröffentlichungen, in denen der simultane bzw. konsekutive Einsatz von Ultraschall und Bestrahlung für Abwasserreinigungszwecke erwähnt wird.
Eine Möglichkeit der Erzeugung von Kavitationen wird durch hydrodynamische Prozeßführung (Düsen) erreicht (HYDROX-Verfahren, US 4,906,387, US 5,393,417). Allerdings sind in diesen Prozessen der Ort der Kavitätserzeugung und der Ort der Bestrahlung räumlich getrennt, so daß bei der begrenzten Lebensdauer der Kavitäten diese während der Bestrahlung keine Rolle mehr spielen. Auch ist die Konzentration der Kavitationsbläschen gering.
Weiterhin werden Sonotroden zur Aktivierung fester Katalysatoren (DE 44 30 391) sowie zur Oberflächenreinigung von Strahlern (US 4,752,401) und Festbettadsorbern (Aktivkohle; US 5,087,374) in Photoreaktoren eingesetzt.

Der vorliegenden Erfindung liegt die Aufgabe zugrunde, ein Verfahren und eine Vorrichtung zur Dekontamination schadstoffbelasteter Wässer vorzustellen, welche durch die kombinierte Anwendung von Ultraschall und Bestrahlung zur Oxidation schwer abbaubarer Umweltschadstoffe führt und dabei die Nachteile der bekannten Verfahren vermeidet.

Mit der vorliegenden Erfindung sollen die bekannten Verfahren zum Schadstoffabbau hinsichtlich ihrer Effizienz, des Einsatzbereiches, der Kosten verursacht durch Energieeinsatz, Chemikalienverbrauch und Einsparung von Vor- und Nachreinigungsstufen, verbessert werden.
Verfahren und Anlage soll einen großtechnischen Einsatz ermöglichen.

Erfindungsgemäß wird diese Aufgabe durch die Merkmale der Ansprüche 1 und 11 gelöst. Vorteilhafte Ausbildungen der Erfindung sind in den zugehörigen Ansprüchen 2 bis 10 bzw. 12 bis 14 enthalten.
Danach werden die schadstoffbelasteten Wässer in eine Vorrichtung, nämlich einen Photosonoreaktor geleitet, wo durch eine im Reaktor angeordnete Hochleistungssonotrode im Behandlungsgut ein Schallfeld erzeugt wird, wobei direkt am Ort der Schadstoffanreicherung durch eine Sonolyse des Wassers das photochemisch aktivierbare Oxidationsmittel H₂O₂ gebildet wird und das Behandlungsgut gleichzeitig mit Licht bestrahlt wird.

Nach der vorliegenden Erfindung erfolgt der Abbau der Schadstoffe in Wässern demgemäß durch synchrone Bestrahlung und Ultraschallanwendung, wobei das kontaminierte Wasser durch einen Durchflußreaktor geleitet wird, der es ermöglicht, daß das von einer Hochleistungssonotrode im zu behandelnden Wasser erzeugte Schallfeld (Kavitäten) sich direkt in der Bestrahlungszone der Lichtquelle befindet.
Es erfolgt eine Abreicherung der Schadstoffe sowie die Bildung von Abbauprodukten.
Nach einem bevorzugten Merkmal der Erfindung werden schadstoffbelastete Wässer mit schwer abbaubaren organischen Halogenverbindungen (CKW, PCB, PCP), Aromaten (BTX, PAK), Nitroverbindungen und Wirkstoffkomponenten aus Industrie und Landwirtschaft in Grund,- Brauch- und Abwässern dekontaminiert, wobei das Behandlungsgut mit Ultraschall einer Frequenz zwischen etwa 40 kHz und 1.7 MHz und mit Strahlung in einem Wellenlängenbereich ab 172 nm bis 900 nm beaufschlagt wird.
Nach einem weiteren Merkmal wird die Dekontamination des Behandlungsgutes bis zur Schadstoffmineralisation vorgenommen. Dem Behandlungsgut kann nach einem anderen Merkmal der Erfindung vor Eintritt in den Reaktor zusätzlich ein externes Oxidationsmittel zugesetzt werden. Als externes Oxidationsmittel können Ozon und/oder H₂O₂ zugesetzt werden. Das behandelte Wasser kann abschließend einer biologischen Kläranlage zugeführt werden.
Nach einem besonders bevorzugten Merkmal der Erfindung werden die durch die Ultraschallbeaufschlagung ausgestrippten gasförmigen Inhaltstoffe und Abbauprodukte einer photooxidativen Mineralisierung unterzogen oder durch Adsorption an Aktivkohle entfernt.
Die Erfindung beinhaltet auch eine Vorrichtung zur Dekontamination schadstoffbelasteter Wässer, die aus mindestens einem Durchflußreaktor mit mindestens einem Ultraschallgeber und mindestens einer Strahlungsquelle besteht, wobei der Reaktor zur Einleitung des Behandlungsgutes mindestens eine Behandlungsöffnung aufweist, an der wenigstens ein Ultraschallgeber angeordnet ist.
Nach einem weiteren Merkmal der Erfindung ist der Durchflußreaktor ein Photosonoreaktor, der transparent für VUV/UV-Strahlung ist. Die Strahlungsquellen sind sowohl innerhalb des Photosonoreaktors als Tauchrohr, und/oder außerhalb eines Quarzzylinders angeordnet. Als Bestrahlungsquellen kommen nach einem weiteren Merkmal Hg-Niederdruck und/oder Hg-Mitteldruck und/oder Excimer-Strahler zum Einsatz.

Die vorliegende Erfindung beinhaltet ein Verfahren, welches sich gegenüber den Einzelverfahren durch überraschende Effekte hinsichtlich der Abbaugeschwindigkeit organischer Kontaminanten auszeichnet, eine Steigerung der Mineralisierungseffizienz bewirkt bzw. diese überhaupt erst ermöglicht. Die Steigerung der Mineralisierungseffizienz wird durch das synchrone Einwirken von Ultraschall und Licht an ein- und demselben Volumen des Reaktors erreicht. Der überraschende Effekt tritt direkt am Ort der Schadstoffanreicherung ein, wo die durch die Bestrahlung erzielte Photoanregung der abzubauenden Spezies und die Kavitationsereignisse in der Anlage synchron stattfinden. Infolgedessen kann der an sich übliche Einsatz von Oxidationsmitteln (O₃, H₂O₂) vollständig eingestellt, bzw. auf ein Minimum reduziert werden.
Ein Vorteil der gleichzeitigen Beaufschlagung des Behandlungsgutes während des Photomineralisationsprozesses mit Ultraschall besteht in der Verhinderung eines unerwünschten und nachteiligen anwendungstechnischen Problems von AOP-Verfahren, dem Verharzen der Strahleroberflächen, das unter rein photochemischen Bedingungen zu einer Verminderung der Strahlungseffizienz bzw. zu hohen Wartungskosten führt.
Das erfindungsgemäße Verfahren der synchronen sono- / photochemischen Dekontamination ermöglicht dünnschichtreaktorähnliche Bedingungen, was eine effizientere und energiesparende Ausnutzung der Strahlungsquellen zur Folge hat. Durch das erfindungsgemäße Verfahren wird auch die Behandlung von angefärbten bzw. getrübten Wässern möglich.
Kostenintensive Vorreinigungsstufen wie z.B. Filtration, Flockung/Fällung können eingespart werden.
Der Mineralisierungsgrad der Schadstoffe kann bei dem erfindungsgemäßen Verfahren über die Verweilzeit bzw. den Energieeintrag bestimmt werden.
Unter wirtschaftlichen Gesichtspunkten ist mit dem Verfahren in Abhängigkeit von Schadstoffart und -konzentration im jeweiligen Anwendungsfall eine Verringerung der Gesamttoxizität, z. B. durch Teilabbau (u.a. Dehalogenierung) von Schadstoffen möglich und häufig ausreichend, wobei der Abbau der Folgeprodukte über eine an sich bekannte biologische Nachklärung erfolgen kann. Eine Detoxifizierung eines breiten Spektrums von Schadstoffen (CKW, PAK, Pestizide, Nitroverbindungen) ist mit dem erfindungsgemäßen Verfahren in nur einem Verfahrensschritt und in einem Reaktionssystem möglich.
Durch Variation des Energieeintrages bzw. der Aufenthaltsdauer des zu behandelnden Wassers im Reaktor ist das erfindungsgemäße Verfahren flexibel für unterschiedliche Verunreinigungsgrade einsetzbar, das heißt, es ist zur Dekontamination gering belasteter Wässer (z. B. Grundwässer) als auch hoch belasteter Industrieabwässer (z. B. Deponiesickerwässer, Produktionsabwasserteilströme) geeignet.

Die Erfindung soll nachfolgend anhand eines Ausführungsbeispieles näher erläutert werden.

Der Begriff Sono-/Photoreaktor wird für eine Anlage zur Dekontamination schadstoffbelasteter Wässer in ihrer Gesamtheit verwendet.

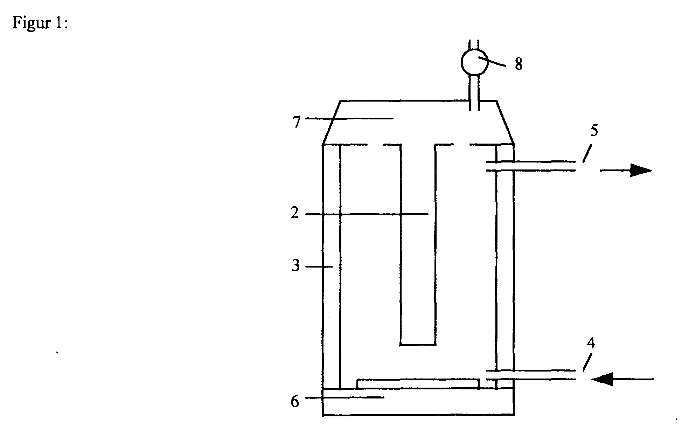

Die Figur 1 zeigt in schematischer Darstellung einen erfindungsgemäßen Reaktor.

Der Sono-/Photoreaktor besteht insbesondere aus einem oder mehreren durchströmbaren Röhrenreaktormodulen 1 aus Quarzglas bzw. Edelstahl, sowie aus weiteren üblichen Reaktorbestandteilen, die für einen Flüssigkeitsumlauf und/oder -kreislauf durch die Module benötigt werden, wie z. B. Leitungen, Pumpen, Probennahmeventile, ggf. Vorratstanks, Dosiereinrichtung u.s.w.. Der Kreislauf- sowie der Zulaufstrom kann durch induktive Durchflußmeßgeräte erfaßt werden. Die Strömungsrichtung ist durch Pfeile angegeben.
Als Reaktormodul (Figur 1) sind diejenigen Reaktorbestandteile bezeichnet, in denen der kombiniert sono-/photochemische Prozeß zur Abwasserdekontamination unter synchroner Lichteinstrahlung und Ultraschallbeaufschlagung stattfindet. Die Lichtquellen können innerhalb des Röhrenmoduls, als Tauchrohr(e) 2, und/oder außerhalb ringförmig 3 angeordnet sein. Der Wasserzulauf 4 befindet sich im unteren Bereich, der Wasserabfluß 5 im oberen Bereich des Reaktormoduls. Den unteren Abschluß eines Röhrenmoduls bildet eine angeflanschte Hochleistungssonotrode 6, (Planschwinger, Konkavschwinger). Das Röhrenmodul wird im oberen Bereich durch eine Verschlußkappe 7 geschlossen, die ein Entlüftungsventil 8 mit einer Druckmeßeinrichtung enthält, um ggf. austretende gasförmige Wasserinhaltstoffe abzuführen und wenn notwendig nachzubehandeln.
In den Zulauf 4 ist als Option eine Dosiereinrichtung für den Zusatz externer Oxidationsmittel z. B. O₃ und/oder H₂O₂ zum Behandlungsgut vorgesehen.

Untersuchungen zur kombinierten sono-/photochemischen Dekontaminierung von Chlororganika enthaltendem Grundwasser mittels eines Labor-Sono-/Photoreaktors wurden an einer Probe von einer Grundwasserschadstoffblase aus dem Bitterfelder Revier vorgenommen. Der Laborreaktor (Röhrenreaktor, h = 70 cm, r = 4 cm) ist mit einem Hg-Mitteldruckstrahler (TQ 718, Tauchrohr) und am unteren Ende mit einer angeflanschten Hochleistungssonotrode (850 kHz) versehen. Aus einem Vorratsgefäß wurden 7,5 l der zu behandelnden Grundwasserprobe kontinuierlich, ohne Zusatz von Hilfsstoffen, insbesondere Oxidationsmitteln (H₂O₂, O₃), über 3 h umgepumpt (8 l/min). Die unbehandelte Grundwasserprobe hatte folgende Ausgangsparameter (AOX = 35 ppm, BSB₅ = 12 ppm, pH = 6.2, Fe-Gehalt = 25 ppm, gelblich, getrübt, hoher Salzgehalt). Die Dehalogenierung chlororganischer Bestandteile wird durch die Verringerung des AOX-Wertes auf 1.5 ppm (95%ige Reduzierung) innerhalb der Behandlungszeit eindeutig nachgewiesen. Gleichzeitig stieg der BSB₅-Wert auf 81 ppm. Eine zusätzliche Toxizitätsprüfung der kombiniert sono- und photochemisch behandelten Grundwasserprobe an einem Belebtschlamm einer kommunalen Biokläranlage erbrachte keinerlei toxische Wirkung auf die Mikroorganismenflora. Zusätzlich wurde zur Kontrolle der Abbaurate einer chloraromatischen Komponente der Grundwasserprobe die Modellsubstanz 4-Chlorphenol zugesetzt (60 ppm) und unter vergleichbaren Bedingungen behandelt. Innerhalb von 30 min wurde der vollständige Abbau der Modellverbindung durch das erfindungsgemäße Verfahren nachgewiesen.

## Patentansprüche

1. Verfahren zur Dekontamination schadstoffbelasteter Wässer, die schwer abbaubare organische Verbindungen enthalten, durch Einwirkung eines Oxidationsmittels auf das belastete Behandlungsgut, wobei das Behandlungsgut in einem Reaktor einer kombinierten photo-/sonochemischen Behandlung ausgesetzt wird, dadurch gekennzeichnet, daß das belastete Behandlungsgut in einen Photosonoreaktor geleitet wird, wo durch eine im Reaktor angeordnete Hochleistungssonotrode im Behandlungsgut ein Schallfeld erzeugt wird und direkt am Ort der Schadstoffanreicherung durch eine Sonolyse des Wassers das photochemisch - aktivierbare Oxidationsmittel H₂O₂ gebildet wird und das Behandlungsgut gleichzeitig mit Licht bestrahlt wird.

2. Verfahren nach Anspruch 1, dadurch gekennzeichnet, daß das Behandlungsgut mit Ultraschall einer Frequenz zwischen etwa 40 kHz und 1.7 MHz beaufschlagt wird.

3. Verfahren nach einem der oben genannten Ansprüche, dadurch gekennzeichnet, daß das Behandlungsgut mit Strahlung in einem Wellenlängenbereich ab 172 nm bis 900 nm beaufschlagt wird.

4. Verfahren nach einem der oben genannten Ansprüche, dadurch gekennzeichnet, daß die Dekontamination des Behandlungsgutes bis zur Schadstoffmineralisation vorgenommen wird.

5. Verfahren nach einem der oben genannten Ansprüche, dadurch gekennzeichnet, daß dem Behandlungsgut vor Eintritt in den Reaktor ein externes Oxidationsmittel zugesetzt wird.

6. Verfahren nach Anspruch 5, dadurch gekennzeichnet, daß als externes Oxidationsmittel Ozon und/oder H₂O₂ dem Behandlungsgut zugesetzt wird.

7. Verfahren nach einem der oben genannten Ansprüche, dadurch gekennzeichnet, daß das behandelte Wasser einer biologischen Kläranlage zugeführt wird.

8. Verfahren nach einem der oben genannten Ansprüche, dadurch gekennzeichnet, daß die durch die Ultraschallbeaufschlagung ausgestrippten gasförmigen Inhaltstoffe und Abbauprodukte einer photooxidativen Mineralisierung unterzogen werden.

9. Verfahren nach einem der oben genannten Ansprüche, dadurch gekennzeichnet, daß die durch die Ultraschallbeaufschlagung abgestrippten gasförmigen Inhaltstoffe und Abbauprodukte durch Adsorption an Aktivkohle entfernt werden.

10. Verfahren nach einem der oben genannten Ansprüche, dadurch gekennzeichnet, daß schadstoffbelastete Wässer mit schwer abbaubaren organischen Halogenverbindungen (CKW, PCB, PCP), Aromaten (BTX, PAK), Nitroverbindungen und Wirkstoffkomponenten aus Industrie und Landwirtschaft in Grund,- Brauch- und Abwässern dekontaminiert werden.

11. Vorrichtung zur Dekontamination schadstoffbelasteter Wässer bestehend aus mindestens einem Durchflußreaktor mit mindestens einem Ultraschallgeber und mindestens einer Strahlungsquelle, wobei der Reaktor zur Einleitung des Behandlungsgutes mindestens eine Behandlungsöffnung aufweist, an der wenigstens ein Ultraschallgeber angeordnet ist.

12. Vorrichtung nach Anspruch 11, dadurch gekennzeichnet, daß der Durchflußreaktor ein Photosonoreaktor ist, der transparent für VUV/UV-Strahlung ist.

13. Vorrichtung nach einem der oben genannten Ansprüche, dadurch gekennzeichnet, daß die Strahlungsquellen sowohl innerhalb des Photosonoreaktors als Tauchrohr, und/oder außerhalb eines Quarzzylinders angeordnet sind.

14. Vorrichtung nach einem der oben genannten Ansprüche, dadurch gekennzeichnet, daß als Bestrahlungsquellen Hg-Niederdruck und/oder Hg-Mitteldruck und/oder Excimer-Strahler zum Einsatz kommen.
